# EUROPEAN PATENT APPLICATION

(11) **EP 4 748 950 A1**
(43) Date of publication of application: **27.05.2026**
(21) Application number: 24214693.4
(22) Date of filing: 22.11.2024
(51) Int. Cl.: C22B 3/44, C22B 7/00, C22B 7/04, C22B 11/02, C22B 11/00, C22B 59/00

(54) **PROCESS FOR THE RECOVERY OF REE AND PGM FROM SECONDARY SOURCES**

(71) Applicant: Umicore, 1000 Brussels (BE)
(72) Inventor: HEULENS, Jeroen, 3370 Kerkom (BE); BOGAERTS, Caroline, 2018 Antwerp (BE)

(57) **Abstract**

The present invention is in the field of metal recycling and concerns a process for the recovery of rare earth elements (REE) and platinum group metals (PGM).

The process comprises the steps of preparing a metallurgical charge, comprising PGM-bearing catalysts, REE-bearing swarf and fluxing agents; feeding the metallurgical charge to a smelting furnace operating in reducing conditions; smelting the metallurgical charge, thereby obtaining a liquid Fe-bullion containing the majority of the PGM, and a liquid slag containing the majority of the REE; and, separating the bullion and the slag; wherein the REE-bearing swarf and the PGM-bearing catalysts are smelted simultaneously.

The process provides a unique synergy of smelting PGM-bearing catalysts and REE-bearing permanent magnets together, resulting in the recovery of PGM and REE in a single process.

## Description

### Introduction

The present invention is in the field of metal recycling and concerns a process for the recovery of rare earth elements (REE) and platinum group metals (PGM).

Climate change is urging a mobility transformation from internal combustion engines (ICE) to battery electric vehicles (BEV). In ICE vehicles, the exhaust emissions are purified by complex post-treatment processes in catalytic converters. These converters typically contain important amounts of valuable platinum group metals (PGM), such as Rh, Pd and Pt.

Dedicated recycling processes were developed to recover these PGM through reductive smelting and subsequent leaching of the PGM-bearing Fe-bullion, for example by Crundwell et al (Recycling of Nickel, Cobalt and Platinum-Group Metals, Chapter 38, Extractive Metallurgy of Nickel, Cobalt and Platinum-Group Metals, pp. 537-565, 2011, Elsevier ISBN978-0-08-096809-4).

When ICE vehicles are gradually replaced by BEV vehicles, the use and recycling volumes of catalytic converters will gradually decline, while the use of permanent magnets, present in BEV-vehicles, will gradually increase. Such magnets are used as stators in electric engines that transform electric energy into motion or vice-versa.

These magnets are often REE-based, such as Nd containing FeNdB alloys. REEs are a group of 17 metallic elements that include the 15 lanthanides of the periodic table, plus scandium and yttrium. These elements are essential in many high-tech applications, such as electronics, renewable energy technologies, or said magnets.

To anticipate the volumes of end-of-life magnets and the recovery of the REE contained therein, several options are being investigated, including dedicated smelting or leaching. For example, Chung et al. (Recovery of Rare Earth Elements from Spent NdFeB-Magnets: Separation of Iron through Reductive Smelting of the Oxidized Material, Second Part, Metals 2022, 12, 1615. https://doi.org/10.3390/met12101615) teaches oxidizing the magnets in air in a first process in a muffle furnace, then subsequently applying reductive smelting in a carbon crucible, using the crucible as reductant. The contact with the carbon is used to reduce the iron oxides while leaving the REE in oxide form. This carbothermic reduction method separates iron as a metallic phase and leaves the REEs in a residue, called "slag phase" by the authors. Contrary to typical pyrometallurgical processes, slag formers or fluxing agents are absent in the described carbothermic reduction and the resulting slag. Moreover, the industrial applicability of this proposal, especially with regards to the carbothermic reduction using a crucible as reductant is rather low.

Permanent magnets are for example FeNdB type of magnets (Neodymium magnets) typically used in applications such as drive trains of electric cars, generators, magnetic separators, consumer electronics, medical devices or wind turbines. Other well-known types are Samarium-Cobalt magnets (SmCo), often also with iron (Fe) as an additional component.

High volumes of end-of-life (EoL) PGM-bearing catalysts are currently available. PGM are the Platinum Group Metals Ru, Rh, Pd, Os, Ir, and Pt.. Spent automotive catalysts (SAC) are full or partial fractions of PGM-bearing catalysts that are used in after-treatment of exhaust gases of internal combustion engines for automobile applications. Such catalysts typically contain of a substrate with high surface area on which an active layer is present. A common combination is a cordierite substrate, loaded with one or more PGM as active elements.

Industrial standalone smelting of such waste streams is known. Often, submerged arc furnaces are used to smelt those catalysts into a PGM-rich bullion and PGM-depleted slag. An example of such a process is reported in EP4087952 B1. Spent catalysts are charged to a furnace with pre-defined amount of iron oxide.

All prior art processes teach standalone treatments for either REE or SAC, typically using a lot of resources and/or energy.

It is therefore an objective of the present invention to provide an efficient and integrated process for the simultaneous recovery of REE and PGM from secondary sources such as PGM-bearing catalysts and permanent magnets.

It has been found that both REE and PGM from secondary sources can be recovered in a single smelting process, combining materials from different waste streams.

A first aspect describes a process for the recovery of REE and PGM, comprising the steps of:
- preparing a metallurgical charge, comprising PGM-bearing catalysts, REE-bearing swarf and fluxing agents;
- feeding the metallurgical charge to a smelting furnace operating in reducing conditions;
- smelting the metallurgical charge, thereby obtaining a liquid Fe-bullion containing the majority of the PGM, and a liquid slag containing the majority of the REE; and,
- separating the bullion and the slag; wherein the PGM-bearing catalysts and the REE-bearing swarf are smelted simultaneously.

A further aspect describes a process according to the first aspect, wherein the metallurgical charge further comprises REE-bearing magnets and wherein the relative amounts of the REE-bearing swarf (Xₛ) and the REE-bearing magnets (Xₘ), expressed in weight, are according to (Xₘ)/(Xₛ) < 1.6.

End of life magnets are metallic by nature, in some cases with a thin layer of oxides on the outer surface. During manufacturing and mainly shaping of the magnets, production waste is generated with a similar composition as the final magnets but oxidic by nature. This is called swarf, magnet swarf or REE-bearing swarf. Both swarf and end of life magnets are thus similarly REE-bearing, forming typical waste streams in the life cycle of permanent magnets.

When REE-bearing magnets are processed in a smelting furnace, the reaction of metallic rare earth elements (such as Nd, Dy, Pr) with transition metal oxides (such as Fe₂O₃) is exothermic, generating heatto maintain the process temperature. During this exothermic reaction, the metallic REE oxidize to REO (= Rare Earth Oxides) and collect in the slag. However, when only REE-bearing swarf is processed, no metallic rare earth elements are present, requiring other reducing agents (such as C) to recover Fe₂O₃ to the bullion as metallic Fe. This reaction is endothermic. The combination of REE-bearing magnets (Xₘ) and REE-bearing swarf (Xₛ) is thus particularly advantageous, especially in terms of energy needs of the process.

A further aspect therefore describes a process, wherein the metallurgical charge comprises PGM-bearing catalysts, fluxing agents, and a combination of REE-bearing swarf and REE-bearing magnets.

When the metallurgical charge comprises a combination of REE-bearing swarf and REE-bearing magnets, respecting a ratio of (Xₘ)/(Xₛ) < 1.6 is important for the process, as ratios above 1.6 will lead to conditions which are too exothermic, creating too high temperatures, and making the process uncontrollable. Overheating of the slag and refractory wear are direct consequences. But most of all also the formation of Fe-bullion and slag, and their proper phase separation, are negatively impacted.

A minimum of (Xₘ)/(Xₛ) > 0.15 is preferred, as this is beneficial for the energy balance. However, the process works entirely without REE-bearing magnets (Xₘ) and only REE-bearing swarf (Xₛ), thus allowing (Xₘ) to be zero.

Running the process only with REE-bearing magnets (Xₘ) as source of REE is in principle possible, but industrially less preferred, mainly because of the above reasons (too exothermic reaction).

A wide variety of input materials can be processed under the conditions of the present invention, with (Xₘ), (Xₛ) and (X_{c}) the relative amounts of magnets, swarf and catalysts respectively. The formula is independent on the amount of catalysts (X_{c}), for example SAC, and allows to maximize the input of (Xₘ) and (Xₛ) in the process.

A further aspect describes a process, wherein the REE-bearing swarf or the REE-bearing magnets originate from permanent magnets of the type FeNdB or Fe-containing SmCo. At least part of the permanent magnets should thus be of a type that contains iron (Fe), as this serves as collector metal for the PGM in the smelting process. This is always the case for FeNdB, and often also for SmCo.

In case the permanent magnets contain additional metals, such as Ni or Co, these will typically also report to the formed Fe-bullion (together with the PGM) and can be recovered according to known procedures.

The prior art does not suggest the simultaneous smelting of PGM-bearing catalysts and permanent magnets, such as REE-bearing swarf or REE-bearing magnets, nor the specific control of the slag chemistry, nor anything around advantageous energy requirements.

By "majority of" is meant "at least 50% of" (e.g. PGM or REE). Preferably, at least 80%, more preferably at least 90%.

In a further aspect, the operating in reducing conditions is performed at a pO₂ in the range of 10⁻¹⁰ to 10⁻¹⁴ atm.

To enable combined smelting of PGM-bearing catalysts and REE-bearing swarf or REE-bearing magnets with simultaneous recovery of both PGM and REE through and alloy and slag respectively, the slag chemistry needs to be carefully controlled. For example by adequate fluxing with SiO₂ and/or control of the FeO content in the slag. The latter can be achieved by adjusting the pO₂. Preferably, a pO₂ in the range of 10⁻¹⁰ to 10⁻¹⁴ is applied, more preferably in the range of 10⁻¹¹ to 10⁻¹³ atm.

In a further aspect, the smelting is performed at a temperature of 1500-1650 °C.

The preferred process temperature can be determined by a slag phase diagram. A temperature of 1500 to 1650 °C is suitable for the present process, a temperature around 1580-1620 °C preferred.

In a further aspect, the liquid slag obtained in the step of smelting comprises CaO < 20% by weight and a ratio of 0.10 < Al₂O₃/SiO₂ < 1.5.

A low melting area for the slag has been identified, which is particularly advantageous for the present process, as it allows a maximum amount of REE to be dissolved in the slag phase.

When combining the two parts of the feed (magnets and SAC), the Al₂O₃/SiO₂ ratio is determined by the SAC. Smelting without flux is possible as such, but safer and advantageous to add SiO₂ to reach a preferred slag composition of 1-50% REO, 17-24% Al₂O₃, 25-36% SiO₂, 1-10% MgO, and less than 10% FeO. This composition allows a maximum valorization of the slag. The reduction can be controlled by adjusting the ratio of metallic (Xₘ) and oxidized (Xₛ) REE-bearing magnets in the feed.

Slag formers, such as CaO, Al₂O₃ or SiO₂, can be added to reach and maintain a slag composition with CaO < 20% and a ratio of 0.10 < Al₂O₃/SiO₂ < 1.5.

While the feed should contain Al₂O₃ and SiO₂, preferably provided by the PGM-bearing catalysts, otherwise added to the feed before smelting, the amount of CaO can also be zero. The amount of CaO should stay below 20%, preferably below 10% and most preferably below 5%.

In standalone SAC smelting, an iron source needs to be added to collect PGMs. In standalone REE magnet smelting, fluxing agents need to be added to reach a smeltable slag system.

In contrast, the present invention provides a unique synergy between PGM-bearing catalysts (X_{c}), such as SAC, and REE-bearing magnets (Xₘ, Xₛ). For example MgO and SiO₂ from SAC substrates serve as fluxing agents for REE, while Fe from the magnets serves as bullion for the collection of the PGMs, all in a single combined smelting operation. The resulting PGM-containing Fe bullion and the REE-containing slag can subsequently be separated and each of them refined according to existing state-of-the-art follow-up processes.

In a further aspect, the PGM-bearing catalysts comprise spent automotive catalysts and/or spent catalyzed diesel particulate filters.

Apart from SAC, also Diesel Particulate Filters (DPF) can be part of the metallurgical charge, alone or together with SAC, as they equally contain PGM (possibly also Au or Ag) and materials that can serve as fluxing agents in the process, such as calcium oxide (CaO), aluminum oxide (Al₂O₃) and silicon dioxide (SiO₂). These materials are used to enhance the performance and durability of the filters. It is therefore advantageous for the present invention when the PGM-bearing catalysts are SAC or DPF. Should the PGM-bearing catalysts contain no or not enough materials such as Al₂O₃, SiO₂ or CaO, they can be added as part of the feed.

Precious metals such as Au or Ag are collected in the Fe-bullion just like PGMs.

In a further aspect, the process is comprising a step of blowing an O₂-bearing gas into the liquid Fe-bullion after separating, thereby slagging part of the Fe and concentrating the PGM in a remaining Fe-bullion.

This step may require adding different fluxing agents, such as CaO and/or SiO₂, to increase efficiency. These can be added to the furnace before or simultaneously with the blowing of O₂.

In a further aspect, the process is comprising the steps of cooling the liquid Fe-bullion or the remaining Fe-bullion, preferably to room temperature, and acidic leaching.

For the acidic leaching of an iron bullion containing PGMs, typical industrial conditions often involve the use of an acid such as hydrochloric acid (HCl), combined with an oxidizing agent, such as chlorine or hydrogen peroxide, at elevated temperatures, such as around 90 °C to 105 °C. In some processes, pressure leaching is employed, especially when using nitric acid (HNO₃).

In a further aspect, the process is comprising the steps of cooling the separated slag, preferably to room temperature, and acidic leaching, thereby obtaining the REE in solution.

After cooling down, the solid slag is preferably powdered, for example by atomization or comminution, possibly after a pre-treatment such as granulation. Particles having a size distribution with a D50 of less than 100 µm are preferred to accelerate the leaching operation. To ensure good kinetics, the leaching step can be performed using a free acid concentration of more than 10 g/L, preferably at a temperature between 50°C and the boiling point of the mixture. The acid may for example be HCl, H₂SO₄ or HNO₃.

A further aspect describes the recovery of REE from the obtained acidic leaching solution by precipitation.

After leaching, the REE can be recovered from solution for example by precipitation of their hydroxides, oxalates, carbonates or double salts, the latter typically sulfates. Depending on the agent used for precipitation, the pH of the acidic leaching solution has to be adapted to achieve best results. While REE-oxalates and REE-double salts are typically precipitated at a lower pH, REE-carbonates or REE-hydroxides are typically precipitated at a higher pH, such as pH 6-7 (carbonates) or pH 8-10 (hydroxides).

Optionally, purification steps may be applied to the aqueous solution prior to the REE precipitation. For example, Si, Fe, and traces of Ni and/or Co can be eliminated by precipitation as oxides, hydroxides, or sulfides.

A further aspect describes the recovery of REE from the obtained acidic leaching solution by solvent extraction.

The REE can be recovered selectively from the aqueous solution by solvent extraction, e.g. using D2EHPA (= Di(2-ethylhexyl)phosphoric acid). Typically this can be done in acidic conditions, either directly from the obtained acidic leaching solution, or after adjusting the pH, for example to a range of 1.5 to 3.5.

A further aspect describes a process, wherein before the step of feeding the PGM-bearing catalysts are comminuted to particles having a d50 of less than 2000 µm, preferably less than 1000 µm, and more preferably less than 500 µm.

The catalysts are broken and milled to a particle size having a d50 of less than 2000 µm, preferably less than 1000 µm, and more preferably less than 500 µm. The increased surface after comminuting is advantageous for the process.

A further aspect describes a process, wherein the slag has a composition by weight according to:
CaO < 20%;
Al₂O₃ 17-24%;
SiO₂ 25-36%;
MgO 1-10%
FeO < 10%; and,
REO 1-50%.

It is advantageous, especially also for follow-up processes, to select the composition of the feed and the process conditions in a way that the percentage of REO in the slag increases to values such as 1 to 50%, preferably 15 to 50%, and more preferably to 25 to 50%. Accordingto the invention, the slag contains up to 50% REO. Values above 50% REO are not feasible for the present process conditions. Applying the process conditions described above leads to a slag with the above outlined preferred compositions by weight and containing essentially all REEs, typically in form of their oxides (= REOs).

Follow-up processes comprise powdering, acidic leaching, separating, precipitating, solvent extraction or purification. As a result, REEs are separated from other components formerly present in the slag and recovered.

A further aspect describes a slag, obtained by the process according to the first aspect, and having a composition by weight according to:
CaO < 20%;
Al₂O₃ 17-24%;
SiO₂ 25-36%;
MgO 1-10%
FeO < 10%; and,
REO 1-50%.

As explained above, according to the invention the slag contains up to 50% REO, such as 1-50% or 15-50% or 25-50%. A content of 25-50% of REO in the slag is preferred, as higher amounts of REO in the slag facilitate the recovery of the REE, and decrease to volume of other slag components, which typically will end up later as waste in landfills.

The unique combination of a simultaneous smelting of PGM-bearing catalysts, such as SAC, and magnets under the specifically adapted process conditions leads to an equally specific slag combination.

The following examples illustrate the invention without limiting its scope.

### Example 1

In this experiment, SAC and REE-bearing swarf are mixed in a 1:1 mass ratio.

600 kg SAC comprising 40.0% Al₂O₃, 36.0% SiO₂, 10.0% MgO, 6.0% ZrO₂, 6.0% CeO₂, 2500 ppm Pd, 200 ppm Rh, and 150 ppm Pt, and 600 kg REE-bearing swarf comprising 44.1% Fe 22.0% Nd₂O₃, 7.0% Pr₂O₃, 6.0% Dy₂O₃, and 2.0% B₂O₃ and 146 kg SiO₂ are mixed until a homogeneous mixture is obtained (Table 1). This mixture is charged to an electric furnace with a capacity of 750 KW and heated to 1600 °C. An appropriate amount of cokes is added to have a pO₂ of 3.5*10⁻¹² atm. After that, the furnace remains at 1600 °C for 30 minutes to allow for phase separation.

226 kg of a high-density Fe-bullion containing PGM (lower layer) and 1021 kg of a low-density slag (upper layer) are formed (Table 2). The Fe-bullion comprises 99.2% Fe, 6625 ppm Pd, 530 ppm Rh, and 397 ppm Pt. The slag comprises 35.9% SiO₂, 24.0% Al₂O₃, 12.9% Nd₂O₃, 6.3% MgO, 4.1% Pr₂O₃, 3.9% Fe, 3.5% ZrO₂, 3.5% CeO₂, 3.5% Dy₂O₃, and 1.2% B₂O₃.

**Table 1. Composition of the feed.**

| **Feed** | **Weight** | **Pt** | **Pd** | **Rh** | **Fe*** | **MgO** | **Al₂O₃** | **SiO₂** | **ZrO₂** | **CeO₂** | **Nd₂O₃** | **Dy₂O₃** | **Pr₂O₃** | **B₂O₃** |
|---|---|---|---|---|---|---|---|---|---|---|---|---|---|---|
| | kg | ppm | ppm | ppm | % | % | % | % | % | % | % | % | % | % |
| SAC | 600 | 150 | 2500 | 200 | | 10.0 | 40.0 | 36.0 | 6.0 | 6.0 | | | | |
| REE swarf | 600 | | | | 44.1 | | | | | | 22.0 | 6.0 | 7.0 | 2.0 |

**Table 2. Composition of the products.**

| **Feed** | **Weight** | **Pt** | **Pd** | **Rh** | **Fe** | **MgO** | **Al₂O₃** | **SiO₂** | **ZrO₂** | **CeO₂** | **Nd₂O₃** | **Dy₂O₃** | **Pr₂O₃** | **B₂O₃** |
|---|---|---|---|---|---|---|---|---|---|---|---|---|---|---|
| | kg | ppm | ppm | ppm | % | % | % | % | % | % | % | % | % | % |
| Bullion | 226 | 397 | 6625 | 530 | 99.2 | | | | | | | | | |
| Slag | 1021 | <5 | <5 | <5 | 3.9 | 6.3 | 24.0 | 35.9 | 3.5 | 3.5 | 12.9 | 3.5 | 4.1 | 1.2 |

This experiment shows that SAC and REE-bearing swarf can be combined in a 1:1 mass ratio to form a smeltable mixture at 1600 °C, which separates into slag and Fe-bullion.

When (Xₘ)/(Xₛ) = 0, the process is controllable and within the capacity of the furnace.

The Fe-bullion collects the PGM with a total yield of more than 99%.

The slag collects the REE essentially quantitatively.

### Example 2

In this experiment, SAC and REE-bearing swarf are mixed in a 1:1.67 mass ratio.

375 kg SAC comprising 40.0% Al₂O₃, 36.0% SiO₂, 10.0% MgO, 6.0% ZrO₂, 6.0% CeO₂, 2500 ppm Pd, 200 ppm Rh, and 150 ppm Pt, and 625 kg REE-bearing swarf comprising 44.1% Fe, 22.0% Nd₂O₃, 7.0% Pr₂O₃, 6.0% Dy₂O₃, and 2.0% B₂O₃ are mixed until a homogeneous mixture is obtained (Table 3). This mixture is charged together with 92 kg SiO₂ to an electric furnace with a capacity of 750 KW and heated to 1600 °C. An appropriate amount of cokes is added to have a pO₂ of 3.5*10⁻¹² atm. After that, the furnace remains at 1600 °C for 30 minutes to allow for phase separation.

247 kg of a high-density Fe-bullion containing PGM (lower layer) and 742 kg of a low-density slag (upper layer) are formed (Table 4). The Fe-bullion comprises 99.6% Fe, 3786 ppm Pd, 303 ppm Rh, and 227 ppm Pt. The slag comprises 31.2% SiO₂, 20.9% Al₂O₃, 18.5% Nd₂O₃, 5.9% Pr₂O₃,5.7% MgO, 5.1% Dy₂O₃, 3.9% Fe, 3.0% CeO₂, 3.0% ZrO₂, and 1.7% B₂O₃.

**Table 3. Composition of the feed.**

| **Feed** | **Weight** | **Pt** | **Pd** | **Rh** | **Fe** | **MgO** | **Al₂O₃** | **SiO₂** | **ZrO₂** | **CeO₂** | **Nd₂O₃** | **Dy₂O₃** | **Pr₂O₃** | **B₂O₃** |
|---|---|---|---|---|---|---|---|---|---|---|---|---|---|---|
| | kg | ppm | ppm | ppm | % | % | % | % | % | % | % | % | % | % |
| SAC | 375 | 150 | 2500 | 200 | | 10.0 | 40.0 | 36.0 | 6.0 | 6.0 | | | | |
| REE swarf | 625 | | | | 44.1 | | | | | | 22.0 | 6.0 | 7.0 | 2.0 |

**Table 4. Composition of the products.**

| **Feed** | **Weight** | **Pt** | **Pd** | **Rh** | **Fe** | **MgO** | **Al₂O₃** | **SiO₂** | **ZrO₂** | **CeO₂** | **Nd₂O₃** | **Dy₂O₃** | **Pr₂O₃** | **B₂O₃** |
|---|---|---|---|---|---|---|---|---|---|---|---|---|---|---|
| | kg | ppm | ppm | ppm | % | % | % | % | % | % | % | % | % | % |
| Bullion | 247 | 227 | 3786 | 303 | 99.6 | | | | | | | | | |
| slag | 742 | <5 | <5 | <5 | 3.9 | 5.7 | 20.9 | 31.2 | 3.0 | 3.0 | 18.5 | 5.1 | 5.9 | 1.7 |

This experiment shows that SAC and REE-bearing swarf can be combined in a 1:1.67 mass ratio to form a smeltable mixture at 1600 °C, which separates into slag and Fe-bullion. When (Xₘ)/(Xₛ) = 0, the process is controllable and within the capacity of the furnace. However, the higher mass fraction of REE-bearing swarf compared to Example 1 requires more cokes and causes the reactions to be more endothermic, thus more energy intensive.

The Fe-bullion collects the PGM with a total yield of more than 99%.

The slag collects the REE essentially quantitatively.

### Example 3

In this experiment, SAC, REE-bearing swarf, and REE-bearing magnets (scrap) are mixed in a 1:0.67:1 mass ratio.

375 kg SAC comprising 40.0% Al₂O₃, 36.0% SiO₂, 10.0% MgO, 6.0% ZrO₂, 6.0% CeO₂, 2500 ppm Pd, 200 ppm Rh, and 150 ppm Pt, and 250 kg REE-bearing swarf comprising 44.1% Fe, 22.0% Nd₂O₃, 7.0% Pr₂O₃, 6.0% Dy₂O₃, and 2.0% B₂O₃ and 375 kg REE-bearing magnets comprising 65.0% Fe, 23.5% Nd₂O₃, 5.7% Dy₂O₃, 5.4% Pr₂O₃, and 3.2% B₂O₃ are mixed until a homogeneous mixture is obtained (Table 5). This mixture is charged together with 90 kg SiO₂ to an electric furnace with a capacity of 750 KW and heated to 1600 °C. An appropriate amount of cokes is added to have a pO₂ of 3.5*10⁻¹² atm. After that, the furnace remains at 1600 °C for 30 minutes to allow for phase separation.

326 kg of a high-density Fe-bullion containing PGM (lower layer) and 730 kg of a low-density slag (upper layer) are formed (Table 6). The Fe-bullion comprises 99.7% Fe, 2871 ppm Pd, 230 ppm Rh, and 172 ppm Pt. The slag comprises 30.9% SiO₂, 20.6% Al₂O₃, 19.6% Nd₂O₃, 5.2% Pr₂O₃, 5.2% MgO, 5.0% Dy₂O₃, 3.9% Fe, 3.1% CeO₂, 3.1% ZrO₂, and 2.3% B₂O₃.

**Table 5. Composition of the feed.**

| **Feed** | **Weight** | **Pt** | **Pd** | **Rh** | **Fe** | **MgO** | **Al₂O₃** | **SiO₂** | **ZrO₂** | **CeO₂** | **Nd₂O₃** | **Dy₂O₃** | **Pr₂O₃** | **B₂O₃** |
|---|---|---|---|---|---|---|---|---|---|---|---|---|---|---|
| | kg | ppm | ppm | ppm | % | % | % | % | % | % | % | % | % | % |
| SAC | 375 | 150 | 2500 | 200 | | 10.0 | 40.0 | 36.0 | 6.0 | 6.0 | | | | |
| REE swarf | 250 | | | | 44.1 | | | | | | 22.0 | 6.0 | 7.0 | 2.0 |
| REE magnet | 375 | | | | 65.0 | | | | | | 23.5 | 5.7 | 5.4 | 3.2 |

**Table 6. Composition of the products.**

| **Feed** | **Weight** | **Pt** | **Pd** | **Rh** | **Fe** | **MgO** | **Al₂O₃** | **SiO₂** | **ZrO₂** | **CeO₂** | **Nd₂O₃** | **Dy₂O₃** | **Pr₂O₃** | **B₂O₃** |
|---|---|---|---|---|---|---|---|---|---|---|---|---|---|---|
| | kg | ppm | ppm | ppm | % | % | % | % | % | % | % | % | % | % |
| Bullion | 326 | 172 | 2871 | 230 | 99.7 | | | | | | | | | |
| Stag | 730 | <5 | <5 | <5 | 3.9 | 5.2 | 20.6 | 30.9 | 3.1 | 3.1 | 19.6 | 5.0 | 5.2 | 2.3 |

This experiment shows that SAC, REE-bearing swarf, and REE-bearing magnets can be combined in a 1:0.67:1 mass ratio to form a smeltable mixture at 1600 °C, which separates into slag and Fe-bullion. For example at (Xₘ)/(Xₛ) = 1.5, the process is controllable and within the capacity of the furnace. The addition of REE-bearing magnets lowers the required energy for the process due to exothermic reactions, resulting in a nearly autogenous process.

The Fe-bullion collects the PGM with a total yield of more than 99%.

The slag collects the REE essentially quantitatively.

In the above tables, iron (Fe) is typically present as metallic iron (Fe) in the bullion, iron(II)oxide (FeO) in the slag, and iron(III)oxide (Fe₂O₃) in the REE-bearing swarf.

### Example 4 (Comparative Example)

In this experiment, SAC, REE-bearing swarf, and REE-bearing magnets (scrap) are mixed in a 1:4.67:9.33 mass ratio.
60 kg SAC comprising 40.0% Al₂O₃, 36.0% SiO₂, 10.0% MgO, 6.0% ZrO₂, 6.0% CeO₂, 2500 ppm Pd, 200 ppm Rh, and 150 ppm Pt, and 280 kg REE-bearing swarf comprising 44.1% Fe, 22.0% Nd₂O₃, 7.0% Pr₂O₃, 6.0% Dy₂O₃, and 2.0% B₂O₃ and 560 kg REE-bearing magnets comprising 65.0% Fe, 23.5% Nd₂O₃, 5.7% Dy₂O₃, 5.4% Pr₂O₃, and 3.2% B₂O₃ are mixed until a homogeneous mixture is obtained. This mixture is charged together with 15 kg SiO₂ to an electric furnace with a capacity of 750 KW and heated to 1600 °C. An appropriate amount of cokes is added to have a pO₂ of 3.5*10⁻¹² atm.

The temperature of the molten bath increases to 1755 °C within 21 minutes. To avoid further overheating of the slag and the associated refractory wear, the experiment is stopped early and phases are tapped without allowing for complete phase separation. No samples were taken due to difficult phase separation at room temperature.

This experiment shows that when (Xₘ)/(Xₛ) = 2.0, the high mass fraction of REE-bearing magnets causes the reaction to be too exothermic. This creates a too high temperature, resulting in an uncontrollable process and severe refractory wear.

## Claims

1. Process for the recovery of REE and PGM, comprising the steps of:
- preparing a metallurgical charge, comprising PGM-bearing catalysts, REE-bearingswarf and fluxing agents;
- feeding the metallurgical charge to a smelting furnace operating in reducing conditions;
- smelting the metallurgical charge, thereby obtaining a liquid Fe-bullion containing the majority of the PGM, and a liquid slag containing the majority of the REE; and,
- separating the bullion and the slag;
wherein the PGM-bearing catalysts and the REE-bearing swarf are smelted simultaneously.

2. Process according to claim 1, wherein the metallurgical charge further comprises REE-bearing magnets and wherein the relative amounts of the REE-bearing swarf (Xₛ) and the REE-bearing magnets (Xₘ), expressed in weight, are according to (Xₘ)/(Xₛ) < 1.6.

3. Process according to claim 1 or 2, wherein the operating in reducing conditions is performed at a pO₂ in the range of 10⁻¹⁰ to 10⁻¹⁴ atm.

4. Process according to any one of claims 1 to 3, wherein the smelting is performed at a temperature of 1500-1650 °C.

5. Process according to any one of claims 1 to 4, wherein the liquid slag obtained in the step of smelting comprises CaO < 20% by weight, and a ratio of 0.10 < Al₂O₃/SiO₂ < 1.5.

6. Process according to any one of claims 1 to 5, wherein the liquid slag has a composition by weight according to:
CaO < 20%;
Al₂O₃ 17-24%;
SiO₂ 25-36%;
MgO 1-10%
FeO < 10%; and,
REO 1-50%.

7. Process according to any one of claims 1 to 6, wherein the PGM-bearing catalysts comprise spent automotive catalysts and/or spent catalyzed diesel particulate filters.

8. Process according to any one of claims 1 to 7, further comprising a step of blowing an O₂-bearing gas into the liquid Fe-bullion after separating, thereby slagging part of the Fe and concentrating the PGM in a remaining Fe-bullion.

9. Process according to any one of claims 1 to 8, further comprising the steps:
- cooling the liquid Fe-bullion or the remaining Fe-bullion, preferably to room temperature; and,
- acidic leaching, thereby obtaining the PGM in solution.

10. Process according to any one of claims 1 to 8, further comprising the steps:
- cooling the separated slag, preferably to room temperature; and,
- acidic leaching, thereby obtaining the REE in a solution.

11. Process according to claim 10, further comprising the steps:
- adjusting the pH of the solution; and,
- precipitating of the REE as hydroxides, oxalates, carbonates or double salts.

12. Process according to claim 10, further comprising a step of solvent extraction of the REE from the solution obtained by acidic leaching.

13. Process according to any one of claims 1 to 8, wherein before the step of feeding the PGM-bearing catalysts are comminuted to particles having a d50 of less than 2000 µm, preferably less than 1000 µm, and more preferably less than 500 µm.

14. Process according to any one of claims 1 to 8, wherein the REE-bearing swarf or the REE-bearing magnets originate from permanent magnets of the type FeNdB or Fe-containing SmCo.

15. A slag obtained by the process according to claim 1, and having a composition by weight according to:
CaO < 20%;
Al₂O₃ 17-24%;
SiO₂ 25-36%;
MgO 1-10%
FeO < 10%; and,
REO 1-50%.
